# EUROPÄISCHE PATENTANMELDUNG

(11) **EP 3 805 040 A1**
(43) Veröffentlichungstag der Anmeldung: **14.04.2021**
(21) Anmeldenummer: 20199752.5
(22) Anmeldetag: 02.10.2020
(51) Int. Cl.: B60L 58/12, B60L 55/00, B60L 53/66

(54) **BATTERIEMODULSYSTEM FÜR EIN FAHRZEUG, VERFAHREN ZUM BESTIMMEN EINER INFORMATION ÜBER EIN BATTERIEMODUL EINES BATTERIEMODULSYSTEMS EINES FAHRZEUGS SOWIE EIN FAHRZEUG MIT SOLCH EINEM BATTERIEMODULSYSTEM**

(30) Priorität: 11.10.2019 DE 102019215687
(71) Anmelder: Robert Bosch GmbH, 70442 Stuttgart (DE)
(72) Erfinder: Landa, Sven, 71732 Tamm (DE)

(57) **Zusammenfassung**

Die Erfindung geht aus von einem Batteriemodulsystem (10) für ein Fahrzeug (100), wobei das Batteriemodulsystem (10) ein Batteriemodul (20) und einen Energiezähler (30) zur Erfassung eines Energieinhalts (E) des Batteriemoduls (30) zu einem vorbestimmten Zeitpunkt aufweist.
Ein Aspekt der Erfindung besteht darin, dass das Batteriemodulsystem (10) eine Verarbeitungseinheit (40) aufweist, welche dazu eingerichtet ist, mittels des Energiezählers (30) einen ersten Energieinhalt (E1) des Batteriemoduls (20) zu einem ersten Zeitpunkt und einen zweiten Energieinhalt (E2) des Batteriemoduls (20) zu einem zweiten Zeitpunkt zu erfassen und in Abhängigkeit vom ersten Energieinhalt (E1) und zweiten Energieinhalt (E2) zu bestimmen, ob zwischen dem ersten Zeitpunkt und dem zweiten Zeitpunkt zumindest Energie aus dem Batteriemodul (20) abgeführt oder Energie in das Batteriemodul (20) zugeführt wurde.

Die Erfindung betrifft zudem ein Verfahren zum Bestimmen einer Information über ein Batteriemodul (20) eines Batteriemodulsystems (10) eines Fahrzeugs (100) sowie ein Fahrzeug (100) mit einem erfindungsgemäßen Batteriemodulsystem (10).

## Beschreibung

### Stand der Technik

Die Erfindung geht aus von einem Batteriemodulsystem für ein Fahrzeug, wobei das Batteriemodulsystem ein Batteriemodul und einen Energiezähler zur Erfassung eines Energieinhalts des Batteriemoduls zu einem vorbestimmten Zeitpunkt aufweist.

Solch ein Batteriemodulsystem ist beispielsweise in der Offenlegungsschrift WO 2011/139680 A2 offenbart. In dieser Schrift ist ein Batteriemodulsystem für ein Fahrzeug offenbart, welches dazu eingerichtet ist, einen aktuellen Energieinhalt des Batteriemoduls zu bestimmen.

### Offenbarung der Erfindung

Die Erfindung geht aus von einem Batteriemodulsystem für ein Fahrzeug, wobei das Batteriemodulsystem ein Batteriemodul und einen Energiezähler zur Erfassung eines Energieinhalts des Batteriemoduls zu einem vorbestimmten Zeitpunkt aufweist.

Ein Aspekt der Erfindung besteht darin, dass das Batteriemodulsystem eine Verarbeitungseinheit aufweist, welche dazu eingerichtet ist, mittels des Energiezählers einen ersten Energieinhalt des Batteriemoduls zu einem ersten Zeitpunkt und einen zweiten Energieinhalt des Batteriemoduls zu einem zweiten Zeitpunkt zu erfassen und in Abhängigkeit vom ersten Energieinhalt und zweiten Energieinhalt zu bestimmen, ob zwischen dem ersten Zeitpunkt und dem zweiten Zeitpunkt zumindest Energie aus dem Batteriemodul abgeführt oder Energie in das Batteriemodul zugeführt wurde.
Vorteilhaft ist hierbei, dass ermittelt werden kann, ob in einer gewissen Zeitspanne Energie aus dem Batteriemodul entnommen oder Energie in das Batteriemodul eingebracht wurde. Dies ist eine zusätzliche Information, welche man sinnvoll verwerten kann, um beispielsweise die Nutzung der Energie zu bewerten.

Das Batteriemodul weist hierbei wenigstens eine galvanische Zelle auf, welche als elektrochemischer Energiespeicher dient und insbesondere wiederaufladbar ist, beispielsweise ein Lithium-Ionen-Akkumulator. Hierdurch kann elektrische Energie aus dem Batteriemodul entnommen, aber auch in das Batteriemodul eingebracht werden.
Unter Energie abgeführt ist hierbei zu verstehen, dass sich die vorhandene Gesamtenergie des Batteriemoduls zum zweiten Zeitpunkt gegenüber der Gesamtenergie des Batteriemoduls zum ersten Zeitpunkt verringert hat. Ebenso ist unter Energie zugeführt zu verstehen, dass sich die Gesamtenergie zum zweiten Zeitpunkt gegenüber der Gesamtenergie zum ersten Zeitpunkt erhöht hat.

Die Zeitspanne, zwischen welcher der erste Energieinhalt und der zweite Energieinhalt erfasst werden, sollte hierbei derartig gewählt werden, dass eine Zufuhr oder Abfuhr von Energie groß genug ist, um erkannt zu werden. Dies kann beispielsweise eine Ladedauer des Batteriemoduls oder zumindest einen zeitlichen Anteil der Ladedauer darstellen. Typischerweise sollte die Zeitspanne zudem so gewählt werden, dass nicht sowohl ein Aufladen als auch ein Entladen innerhalb der gewählten Zeitspanne auftritt. Ist die Zeitspanne zwischen dem ersten Zeitpunkt und dem zweiten Zeitpunkt gering genug, beispielsweise kleiner als eine Minute, sollte es typischerweise nicht vorkommen, dass während der Zeitspanne sowohl Energie abgeführt als auch zugeführt wird.
Der zweite Zeitpunkt liegt hierbei nach dem ersten Zeitpunkt.

Ein Fahrzeug kann hierbei beispielsweise ein Personenkraftwagen, ein Lastkraftwagen oder auch ein Zweirad darstellen. Insbesondere ist das Fahrzeug hierbei ein Elektro- oder Hybrid-Fahrzeug, welches besonders bevorzugt einen Elektromotor aufweist. Der Elektromotor kann hierbei über das Batteriemodul mit elektrischer Energie versorgt werden, um den Elektromotor zu betreiben und somit das Fahrzeug anzutreiben.
Zudem kann das Batteriemodul aber auch als Zwischenspeicher genutzt werden. Das heißt es wird mit elektrischer Energie von einem externen Verbraucher, beispielsweise einem Stromnetz, versorgt und speist diese Energie später wieder an einen externen Verbraucher zurück anstatt diese dem Elektromotor zur Verfügung zu stellen. Hierdurch erfolgt beispielsweise eine Rückspeisung ins Stromnetz.
Hierbei ist es auch denkbar, dass das Batteriemodulsystem zusätzlich einen Stromsensor aufweist, wobei der Stromsensor derartig ausgestaltet und angeordnet ist, dass die Verarbeitungseinheit mittels des Stromsensors einen Stromfluss durch einen elektrischen Verbindungsknoten erfassen kann. Insbesondere kann hierbei auch die Richtung des Stromflusses mittels des Stromsensors bestimmt werden. Der Verbindungsknoten kann beispielsweise der elektrische Anschluss des Batteriemodulsystems an einen externen Verbraucher, wie ein Stromnetz, oder eine entsprechende elektrische Leitung sein.
Die Verarbeitungseinheit kann zudem dazu eingerichtet sein, in Abhängigkeit von dem erfassten Stromfluss und der Energiedifferenz zu bestimmen, ob elektrische Energie mit dem Verbindungsknoten verbundenen, externen Verbraucher ausgetauscht wurde. Ist beispielsweise eine Energieabfuhr bestimmt und zusätzlich ein Stromfluss durch den Verbindungsknoten erfasst worden, kann die Verarbeitungseinheit folglich bestimmen, dass elektrische Energie an den entsprechenden externen Verbraucher geflossen ist.

Unter Energieinhalt ist die in dem Batteriemodul aktuell vorhandene Energie zu verstehen. Der Energieinhalt ist hierbei das Produkt aus verfügbarer Kapazität in Amperestunden und Spannung des Batteriemoduls in Volt, wodurch die Einheit des Energieinhalts Wattstunden ist. Die Kapazität und die Spannung können vom Energiezähler abgegriffen und entsprechend hieraus durch die Verarbeitungseinheit ein Energieinhalt bestimmt werden.
Üblicherweise wurde bisher der State of charge (SOC) bestimmt, welcher das Verhältnis zwischen aktueller Kapazität und maximaler Kapazität des Batteriemoduls definiert und somit einen Kennwert für den Ladezustand des Batteriemoduls darstellt. Der Energieinhalt stellt hierbei somit eine weitere Größe zur Charakterisierung des Batteriemoduls dar.

Die Verarbeitungseinheit ist beispielsweise als Mikrocontroller ausgestaltet und direkt lokal in der Nähe des Batteriemoduls im Fahrzeug angeordnet.
Es ist jedoch auch denkbar, dass die Verarbeitungseinheit als externer Server ausgestaltet ist, wobei die erfassten Energieinhalte mittels einer entsprechenden Kommunikationseinheit vom Energiezähler zur Verarbeitungseinheit, insbesondere drahtlos, übertragen und anschließend ausgewertet werden können. Dies hat den Vorteil, dass ein externer Server typischerweise eine sehr große Rechenleistung aufweist und somit schnell bestimmt werden kann, ob Energie abgeführt oder zugeführt wurde.

Eine Ausgestaltung des erfindungsgemäßen Batteriemodulsystems sieht vor, dass die Verarbeitungseinheit dazu eingerichtet ist, eine Energiedifferenz zu bestimmen, indem der erste Energieinhalt vom zweiten Energieinhalt subtrahiert wird, wobei die Verarbeitungseinheit dazu eingerichtet ist, bei einer negativen Energiedifferenz zu bestimmen, dass Energie aus dem Batteriemodul abgeführt wurde, und bei einer positiven Energiedifferenz zu bestimmen, dass Energie in das Batteriemodul zugeführt wurde.
Vorteilhaft ist hierbei, dass dies eine einfache Möglichkeit darstellt, zu bestimmen, ob zwischen dem ersten Zeitpunkt und dem zweiten Zeitpunkt Energie aus dem Batteriemodul abgeführt wurde oder ob Energie in das Batteriemodul zugeführt wurde.
Bei einer negativen Energiedifferenz ist es trotzdem auch denkbar, dass Energie zeitweise zugeführt wurde, jedoch der Gesamtenergieumsatz negativ ist. Folglich kann bei einer negativen Energiedifferenz zumindest die sichere Aussage getroffen werden, dass Energie abgegeben wurde.
Entsprechend kann bei einer positiven Energiedifferenz zumindest die sichere Aussage getroffen werden, dass Energie zugeführt wurde.
Ist die Energiedifferenz dagegen Null, wurde entweder keine Energie ab- und zugeführt oder aber die abgeführte Energie und zugeführte Energie waren identisch und glichen sich somit aus.

Eine weitere Ausgestaltung des erfindungsgemäßen Batteriemodulsystems sieht vor, dass die Verarbeitungseinheit dazu eingerichtet ist, eine vom Fahrzeug zwischen dem ersten Zeitpunkt und dem zweiten Zeitpunkt zurückgelegte Wegstrecke zu erfassen, wobei die Verarbeitungseinheit dazu eingerichtet ist, falls Energie abgeführt wurde und zudem die erfasste Wegstrecke ungleich Null ist, zu bestimmen, dass die abgeführte Energie zumindest teilweise an einen Elektromotor des Fahrzeugs abgeführt wurde.
Vorteilhaft ist hierbei, dass dies eine einfache Möglichkeit darstellt, zu bestimmen, ob die Energie zur Fortbewegung des Fahrzeugs genutzt wurde.

Unter zurückgelegter Wegstrecke ist hierbei nicht unbedingt zu verstehen, dass exakt erfasst wird, wie weit sich das Fahrzeug zwischen dem ersten Zeitpunkt und dem zweiten Zeitpunkt bewegt hat. Vielmehr ist darunter zu verstehen, dass erfasst wird, ob sich das Fahrzeug in der entsprechenden Zeitspanne überhaupt bewegt hat, da eine solche Bewegung des Fahrzeugs darauf schließen lässt, dass die abgeführte Energie für den Elektromotor als Antrieb des Fahrzeugs genutzt wurde.
Die Wegstrecke kann folglich beispielsweise mittels eines Kilometerstandzählers des Fahrzeugs, mittels eines Beschleunigungssensors oder mittels GPS-Systems erfasst werden. Wird die Wegstrecke exakt bestimmt, kann insbesondere eine Plausibilisierung erfolgen, ob die abgeführte Energie in etwa der für die Fortbewegung des Fahrzeugs notwendigen Energie entspricht. Hierdurch lässt sich folgern, ob die abgeführte Energie im Wesentlichen für die Fortbewegung des Fahrzeugs genutzt wurde oder ob dies nicht der Fall ist.

Gemäß einer Ausgestaltung des erfindungsgemäßen Batteriemodulsystems ist vorgesehen, dass die Verarbeitungseinheit dazu eingerichtet ist, falls Energie abgeführt wurde und zudem die erfasste Wegstrecke gleich Null ist, zu bestimmen, dass die abgeführte Energie zumindest teilweise an einen externen Verbraucher abgeführt wurde.
Vorteilhaft ist hierbei, dass dies eine einfache Möglichkeit darstellt, zu bestimmen, ob die Energie an einen externen Verbraucher abgeführt wurde.

Unter externer Verbraucher ist hierbei jeder elektrische Verbraucher außer dem Elektromotor zu verstehen. Als externer Verbraucher kann folglich beispielsweise ein Verbraucher im Fahrzeug, beispielsweise eine Standheizung, ein Mobiltelefon-Ladegerät oder ein Infotainment-System aufgefasst werden. Jedoch ist als externer Verbraucher auch das öffentliche Stromnetz zu verstehen, wobei abgeführte Energie als Netz-Rückspeisung verstanden werden kann und wobei über das Stromnetz zudem Energie in das Batteriemodul zugeführt werden kann.

Gemäß einer weiteren Ausgestaltung des Batteriemodulsystems ist vorgesehen, dass die Verarbeitungseinheit dazu eingerichtet ist, eine private und/oder geschäftliche Nutzung des Fahrzeugs zwischen dem ersten Zeitpunkt und dem zweiten Zeitpunkt zu bestimmen.
Vorteilhaft ist hierbei, dass Rückschlüsse darüber gemacht werden können, ob eine korrekte Nutzung der Energie erfolgt ist und diese nicht unrechtmäßig verwendet bzw. bezogen wurde.

Ob eine private und/oder geschäftliche Nutzung vorliegt, kann beispielsweise durch eine Eingabe eines Fahrzeugführers erfolgen, der die entsprechende Information zur Verfügung stellt. Alternativ oder zusätzlich kann die Nutzung beispielsweise auch abhängig vom Standort und/oder von der Uhrzeit erfasst werden. So können typische Standorte und Uhrzeiten hinterlegt werden, bei welchen das Fahrzeug privat bzw. geschäftlich genutzt wird.
Die Abgrenzung durch die Nutzungsart ist insbesondere für abgeführte Energie nützlich, um beispielsweise festzustellen, ob der Fahrzeugführer eines Geschäftswagens, die typischerweise kostenlos erhaltene Energie korrekt genutzt hat und beispielsweise diese Energie nicht gegen Entgelt ins Stromnetz zurückgespeist oder für einen anderen externen Verbraucher genutzt wurde. Die Unterscheidung ist jedoch auch für zugeführte Energie sinnvoll, beispielsweise um festzustellen, ob der Fahrzeugführer über das Geschäftsfahrzeugmodell kostenlos Energie geladen hat. Ansonsten müsst der Fahrzeugführer die Energie nämlich selbst bezahlen und darf dann folglich aber auch Energie gegen Entgelt ins Stromnetz zurückspeisen oder für andere externe Verbraucher nutzen.

Die Erfindung betrifft zudem ein Verfahren zum Bestimmen einer Information über ein Batteriemodul eines Batteriemodulsystems eines Fahrzeugs, insbesondere mittels eines erfindungsgemäßen Batteriemoduls, mit wenigstens folgenden Verfahrensschritten:
a. Erfassen eines ersten Energieinhalts des Batteriemoduls zu einem ersten Zeitpunkt mittels eines Energiezählers,
b. Erfassen eines zweiten Energieinhalts des Batteriemoduls zu einem zweiten Zeitpunkt mittels des Energiezählers,
c. Bestimmen in Abhängigkeit vom ersten Energieinhalt und zweiten Energieinhalt, ob zwischen dem ersten Zeitpunkt und dem zweiten Zeitpunkt zumindest Energie aus dem Batteriemodul abgeführt oder Energie in das Batteriemodul zugeführt wurde.

Vorteilhaft ist hierbei, dass ermittelt werden kann, ob in einer gewissen Zeitspanne Energie aus dem Batteriemodul entnommen oder Energie in das Batteriemodul eingebracht wurde. Dies ist eine zusätzliche Information, welche man sinnvoll verwerten kann, um beispielsweise die Nutzung der Energie zu bewerten.

In einer Ausgestaltung des erfindungsgemäßen Verfahrens ist vorgesehen, dass im Verfahrensschritt c eine Energiedifferenz bestimmt wird, indem der erste Energieinhalt vom zweiten Energieinhalt subtrahiert wird, wobei bei einer negativen Energiedifferenz bestimmt wird, dass Energie aus dem Batteriemodul abgeführt wurde, und bei einer positiven Energiedifferenz bestimmt wird, dass Energie in das Batteriemodul zugeführt wurde.
Vorteilhaft ist hierbei, dass dies eine einfache Möglichkeit darstellt, zu bestimmen, ob zwischen dem ersten Zeitpunkt und dem zweiten Zeitpunkt Energie aus dem Batteriemodul abgeführt wurde oder ob Energie in das Batteriemodul zugeführt wurde.
Bei einer negativen Energiedifferenz ist es trotzdem auch denkbar, dass Energie zeitweise zugeführt wurde, jedoch der Gesamtenergieumsatz negativ ist. Folglich kann bei einer negativen Energiedifferenz zumindest die sichere Aussage getroffen werden, dass Energie abgegeben wurde.
Entsprechend kann bei einer positiven Energiedifferenz zumindest die sichere Aussage getroffen werden, dass Energie zugeführt wurde.
Ist die Energiedifferenz dagegen Null, wurde entweder keine Energie ab- und zugeführt oder aber die abgeführte Energie und zugeführte Energie waren identisch und glichen sich somit aus. Ist die Zeitspanne zwischen dem ersten Zeitpunkt und dem zweiten Zeitpunkt gering genug, beispielsweise kleiner als eine Minute, sollte es nicht vorkommen, dass während der Zeitspanne sowohl Energie abgeführt als auch zugeführt wird.

Gemäß einer vorteilhaften Ausgestaltung des erfindungsgemäßen Verfahrens ist vorgesehen, dass ein Verfahrensschritt d abläuft, in welchem eine vom Fahrzeug zwischen dem ersten Zeitpunkt und dem zweiten Zeitpunkt zurückgelegte Wegstrecke erfasst wird, und wobei nach dem Verfahrensschritt c und d ein Verfahrensschritt e abläuft, in welchem bestimmt wird, dass falls Energie abgeführt wurde und zudem die erfasste Wegstrecke ungleich Null ist, die abgeführte Energie zumindest teilweise an einen Elektromotor des Fahrzeugs abgeführt wurde.
Vorteilhaft ist hierbei, dass dies eine einfache Möglichkeit darstellt, zu bestimmen, ob die Energie zur Fortbewegung des Fahrzeugs genutzt wurde..

Gemäß einer weiteren vorteilhaften Ausgestaltung des erfindungsgemäßen Verfahrens ist vorgesehen, dass im Verfahrensschritt e bestimmt wird, dass falls Energie abgeführt wurde und zudem die erfasste Wegstrecke gleich Null ist, die abgeführte Energie zumindest teilweise an einen externen Verbraucher abgeführt wurde.
Vorteilhaft ist hierbei, dass dies eine einfache Möglichkeit darstellt, zu bestimmen, ob die Energie an einen externen Verbraucher abgeführt wurde.

Gemäß einer weiteren vorteilhaften Ausgestaltung des erfindungsgemäßen Verfahrens ist vorgesehen, dass in einem Verfahrensschritt f bestimmt wird, ob das Fahrzeug zwischen dem ersten und zweiten Zeitpunkt privat und/oder geschäftlich genutzt wurde.
Vorteilhaft ist hierbei, dass Rückschlüsse darüber gemacht werden können, ob eine korrekte Nutzung der Energie erfolgt ist und diese nicht unrechtmäßig verwendet bzw. bezogen wurde.

Die Erfindung betrifft zudem ein Fahrzeug mit einem erfindungsgemäßen Batteriemodulsystem. Dieses Fahrzeug weist insbesondere einen vom Batteriemodul gespeisten Elektromotor auf.

### Zeichnungen

Fig. 1 zeigt ein Ausführungsbeispiel ein Fahrzeug mit einem erfindungsgemäßen Batteriemodulsystem.
Fig. 2 zeigt ein Ausführungsbeispiel eines erfindungsgemäßen Verfahrens zum Bestimmen einer Information über ein Batteriemodul eines Batteriemodulsystems eines Fahrzeugs.

### Beschreibung von Ausführungsbeispielen

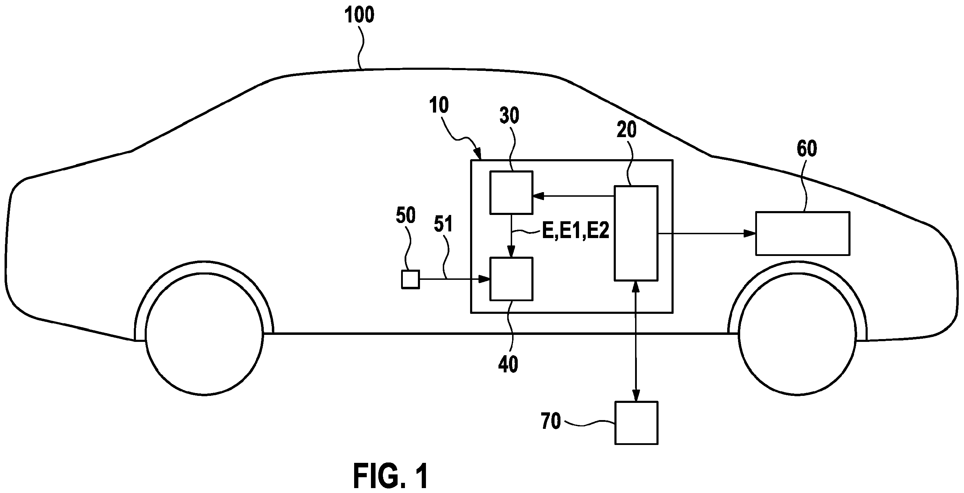

Fig. 1 zeigt ein Ausführungsbeispiel ein Fahrzeug mit einem erfindungsgemäßen Batteriemodulsystem.
Dargestellt ist ein Fahrzeug 100, welches insbesondere als Elektro- bzw. Hybridfahrzeug ausgestaltet ist und entsprechend einen Elektromotor 60 aufweist.
Das Fahrzeug 100 weist zudem ein Batteriemodulsystem 10 auf. Das Batteriemodulsystem 10 weist wiederum ein Batteriemodul 20 auf, welches wenigstens eine nicht dargestellte galvanische Einzelzelle aufweist. Insbesondere ist das Batteriemodul 20 aus einer Vielzahl von seriell geschalteten galvanischen Einzelzellen aufgebaut. Das Batteriemodul 20 kann insbesondere den Elektromotor 60 mit elektrischer Energie versorgen. Zudem kann das Batteriemodul 20 mit wenigstens einem externen Verbraucher 70 in Verbindung stehen, um elektrische Energie abzuführen bzw. auch zugeführt zu bekommen. Hierfür kann der externe Verbraucher 70 beispielsweise als öffentliches Stromnetz ausgestaltet sein. Ein weiterer externer Verbraucher 70 kann ein Verbraucher im Fahrzeug 100 sein, beispielsweise eine Standheizung, ein Mobiltelefon-Ladegerät oder ein Infotainment-System.

Des Weiteren weist das Batteriemodulsystem 10 einen Energiezähler 30 zur Erfassung eines Energieinhalts E des Batteriemoduls 20 zu einem vorbestimmten Zeitpunkt und eine Verarbeitungseinheit 40 auf.
Die Verarbeitungseinheit 40 ist derartig mit dem Energiezähler 30 verbunden, dass die Verarbeitungseinheit 40 einen ersten Energieinhalt E1 des Batteriemoduls 20 zu einem ersten Zeitpunkt und einen zweiten Energieinhalt E2 des Batteriemoduls 20 zu einem zweiten Zeitpunkt mittels des Energiezählers 30 erfassen kann.

Die Verarbeitungseinheit 40 könnte beispielsweise ein Mikrocontroller sein.
Die Verarbeitungseinheit 40 ist dazu eingerichtet, in Abhängigkeit vom ersten Energieinhalt E1 und vom zweiten Energieinhalt E2 zu bestimmen, ob zwischen dem ersten Zeitpunkt und dem zweiten Zeitpunkt zumindest Energie aus dem Batteriemodul 20 abgeführt oder Energie in das Batteriemodul 20 zugeführt wurde.

Insbesondere kann die Verarbeitungseinheit 40 hierfür dazu eingerichtet sein, eine Energiedifferenz zu bestimmen, indem der erste Energieinhalt E1 vom zweiten Energieinhalt E2 subtrahiert wird, wobei die Verarbeitungseinheit 40 dazu eingerichtet ist, bei einer negativen Energiedifferenz zu bestimmen, dass Energie aus dem Batteriemodul 20 abgeführt wurde, und bei einer positiven Energiedifferenz zu bestimmen, dass Energie in das Batteriemodul 20 zugeführt wurde.

Optional ist die Verarbeitungseinheit 40 zudem dazu eingerichtet, eine vom Fahrzeug 100 zwischen dem ersten Zeitpunkt und dem zweiten Zeitpunkt zurückgelegte Wegstrecke 51 zu erfassen, wobei die Verarbeitungseinheit 40 dazu eingerichtet ist, falls Energie abgeführt wurde und zudem die erfasste Wegstrecke 51 ungleich Null ist, zu bestimmen, dass die abgeführte Energie zumindest teilweise an den Elektromotor 60 des Fahrzeugs 100 abgeführt wurde. Die Wegstrecke 51 kann die Verarbeitungseinheit 40 beispielsweise mittels eines externen Bewegungssensors 50 erfassen, welcher jedoch auch im Batteriemodulsystem 10 integriert sein könnte. Der externe Bewegungssensor 50 kann beispielsweise als Kilometerstandzähler des Fahrzeugs 100, als Beschleunigungssensor oder als GPS-System ausgestaltet sein.

Des Weiteren ist optional die Verarbeitungseinheit 40 dazu eingerichtet, falls Energie abgeführt wurde und zudem die erfasste Wegstrecke gleich Null ist, zu bestimmen, dass die abgeführte Energie zumindest teilweise an einen externen Verbraucher 70 abgeführt wurde.

Des Weiteren kann die Verarbeitungseinheit 40 dazu eingerichtet sein, eine private und/oder geschäftliche Nutzung des Fahrzeugs 100 zwischen dem ersten Zeitpunkt und dem zweiten Zeitpunkt zu bestimmen.
Ob eine private und/oder geschäftliche Nutzung vorliegt, kann beispielsweise durch eine Eingabe eines Fahrzeugführers erfolgen, der die entsprechende Information zur Verfügung stellt. Alternativ oder zusätzlich kann die Nutzung beispielsweise auch abhängig vom Standort des Fahrzeugs 100 und/oder von der Uhrzeit der Nutzung erfasst werden. So können Standorte und Uhrzeiten hinterlegt werden, bei welchen das Fahrzeug 100 typischerweise privat bzw. geschäftlich genutzt wird.

Des Weiteren kann das Batteriemodulsystem 10 eine nicht dargestellte Speichereinheit aufweisen, welche mit der Verarbeitungseinheit 40 verbunden ist, wobei die Verarbeitungseinheit 40 dazu eingerichtet ist, die Energieinhalte E1, E2 oder auch das Resultat, ob Energie abgeführt oder zugeführt wurde, in der Speichereinheit abzuspeichern. Alternativ kann dies auch in einem internen, nicht dargestellten Speicher der Verarbeitungseinheit 40 abgespeichert werden. Insbesondere werden hierbei auch der erste und zweite Zeitpunkt und auch die Nutzungsart des Fahrzeugs 100 als Information in der Speichereinheit abgespeichert.

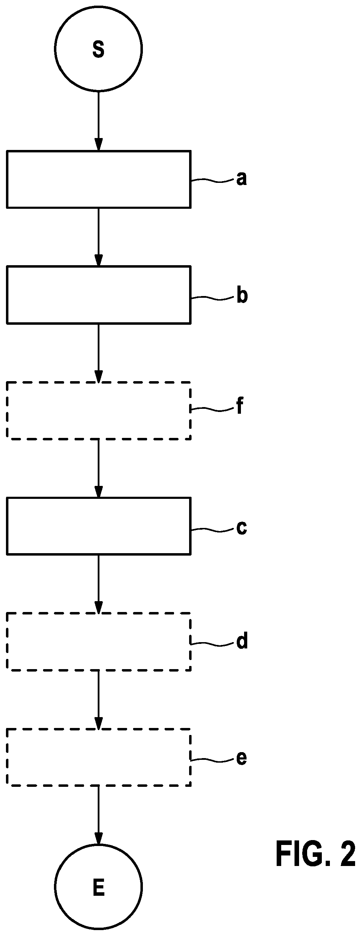

Fig. 2 zeigt ein Ausführungsbeispiel eines erfindungsgemäßen Verfahrens zum Bestimmen einer Information über ein Batteriemodul eines Batteriemodulsystems eines Fahrzeugs.
Zuerst wird in einem Verfahrensschritt a ein erster Energieinhalt E1 des Batteriemoduls 20 zu einem ersten Zeitpunkt mittels eines Energiezählers 30 erfasst.

In einem Verfahrensschritt b wird anschließend ein zweiter Energieinhalt E2 des Batteriemoduls 20 zu einem zweiten Zeitpunkt mittels eines Energiezählers 30 erfasst.

Anschließend wird in einem Verfahrensschritt c in Abhängigkeit vom ersten Energieinhalt E1 und zweiten Energieinhalt E2, ob zwischen dem ersten Zeitpunkt und dem zweiten Zeitpunkt zumindest Energie aus dem Batteriemodul 20 abgeführt oder Energie in das Batteriemodul 20 zugeführt wurde. Insbesondere wird im Verfahrensschritt c eine Energiedifferenz bestimmt, indem der erste Energieinhalt E1 vom zweiten Energieinhalt E2 subtrahiert wird, wobei bei einer negativen Energiedifferenz bestimmt wird, dass Energie aus dem Batteriemodul 20 abgeführt wurde, und bei einer positiven Energiedifferenz bestimmt wird, dass Energie in das Batteriemodul 20 zugeführt wurde.

Optional kann zusätzlich ein Verfahrensschritt d ablaufen, in welchem eine vom Fahrzeug 100 zwischen dem ersten Zeitpunkt und dem zweiten Zeitpunkt zurückgelegte Wegstrecke 51 erfasst wird, und nach dem Verfahrensschritt c und d ein Verfahrensschritt e ablaufen, in welchem bestimmt wird, dass falls Energie abgeführt wurde und zudem die erfasste Wegstrecke 51 ungleich Null ist, die abgeführte Energie zumindest teilweise an einen Elektromotor 60 des Fahrzeugs 100 abgeführt wurde.
Des Weiteren kann im Verfahrensschritt e bestimmt werden, dass falls Energie abgeführt wurde und zudem die erfasste Wegstrecke 51 gleich Null ist, die abgeführte Energie zumindest teilweise an einen externen Verbraucher 70 abgeführt wurde.
Der Verfahrensschritt d kann insbesondere zum Beispiel parallel zum Verfahrensschritt a und b ablaufen oder aber auch nach dem Verfahrensschritt c.

Optional kann zudem noch ein Verfahrensschritt f ablaufen, in welchem bestimmt wird, ob das Fahrzeug 100 zwischen dem ersten und zweiten Zeitpunkt privat und/oder geschäftlich genutzt wurde. Der Verfahrensschritt f kann beispielsweise ebenfalls parallel zu den Verfahrensschritten a und b ablaufen oder aber an einer beliebig anderen Stelle nach den Verfahrensschritten a und b.

## Patentansprüche

1. Batteriemodulsystem (10) für ein Fahrzeug (100), wobei das Batteriemodulsystem (10) ein Batteriemodul (20) und einen Energiezähler (30) zur Erfassung eines Energieinhalts (E) des Batteriemoduls (20) zu einem vorbestimmten Zeitpunkt aufweist,
**dadurch gekennzeichnet, dass**
das Batteriemodulsystem (10) eine Verarbeitungseinheit (40) aufweist, welche dazu eingerichtet ist, mittels des Energiezählers (30) einen ersten Energieinhalt (E1) des Batteriemoduls (20) zu einem ersten Zeitpunkt und einen zweiten Energieinhalt (E2) des Batteriemoduls (20) zu einem zweiten Zeitpunkt zu erfassen und in Abhängigkeit vom ersten Energieinhalt (E1) und zweiten Energieinhalt (E2) zu bestimmen, ob zwischen dem ersten Zeitpunkt und dem zweiten Zeitpunkt zumindest Energie aus dem Batteriemodul (20) abgeführt oder Energie in das Batteriemodul (20) zugeführt wurde.

2. Batteriemodulsystem (10) nach Anspruch 1, **dadurch gekennzeichnet, dass** die Verarbeitungseinheit (40) dazu eingerichtet ist, eine Energiedifferenz zu bestimmen, indem der erste Energieinhalt (E1) vom zweiten Energieinhalt (E2) subtrahiert wird, wobei die Verarbeitungseinheit (40) dazu eingerichtet ist, bei einer negativen Energiedifferenz zu bestimmen, dass Energie aus dem Batteriemodul (20) abgeführt wurde, und bei einer positiven Energiedifferenz zu bestimmen, dass Energie in das Batteriemodul (20) zugeführt wurde.

3. Batteriemodulsystem (10) nach Anspruch 1 oder 2, **dadurch gekennzeichnet, dass** die Verarbeitungseinheit (40) dazu eingerichtet ist, eine vom Fahrzeug (100) zwischen dem ersten Zeitpunkt und dem zweiten Zeitpunkt zurückgelegte Wegstrecke (51) zu erfassen, wobei die Verarbeitungseinheit (40) dazu eingerichtet ist, falls Energie abgeführt wurde und zudem die erfasste Wegstrecke (51) ungleich Null ist, zu bestimmen, dass die abgeführte Energie zumindest teilweise an einen Elektromotor (60) des Fahrzeugs (100) abgeführt wurde.

4. Batteriemodulsystem (10) nach Anspruch 3, **dadurch gekennzeichnet, dass** die Verarbeitungseinheit (40) dazu eingerichtet ist, falls Energie abgeführt wurde und zudem die erfasste Wegstrecke gleich Null ist, zu bestimmen, dass die abgeführte Energie zumindest teilweise an einen externen Verbraucher (70) abgeführt wurde.

5. Batteriemodulsystem (10) nach einem der vorhergehenden Ansprüche, **dadurch gekennzeichnet, dass** die Verarbeitungseinheit (40) dazu eingerichtet ist, eine private und/oder geschäftliche Nutzung des Fahrzeugs (100) zwischen dem ersten Zeitpunkt und dem zweiten Zeitpunkt zu bestimmen.

6. Verfahren zum Bestimmen einer Information über ein Batteriemodul (20) eines Batteriemodulsystems (10) eines Fahrzeugs (100), wobei das Verfahren wenigstens folgende Verfahrensschritte umfasst:
a. Erfassen eines ersten Energieinhalts (E1) des Batteriemoduls (20) zu einem ersten Zeitpunkt mittels eines Energiezählers (30),
b. Erfassen eines zweiten Energieinhalts (E2) des Batteriemoduls (20) zu einem zweiten Zeitpunkt mittels des Energiezählers (30),
c. Bestimmen in Abhängigkeit vom ersten Energieinhalt (E1) und zweiten Energieinhalt (E2), ob zwischen dem ersten Zeitpunkt und dem zweiten Zeitpunkt zumindest Energie aus dem Batteriemodul (20) abgeführt oder Energie in das Batteriemodul (20) zugeführt wurde.

7. Verfahren nach Anspruch 6, **dadurch gekennzeichnet, dass** im Verfahrensschritt c eine Energiedifferenz bestimmt wird, indem der erste Energieinhalt (E1) vom zweiten Energieinhalt (E2) subtrahiert wird, wobei bei einer negativen Energiedifferenz bestimmt wird, dass Energie aus dem Batteriemodul (20) abgeführt wurde, und bei einer positiven Energiedifferenz bestimmt wird, dass Energie in das Batteriemodul (20) zugeführt wurde.

8. Verfahren nach Anspruch 6 oder 7, **dadurch gekennzeichnet, dass** ein Verfahrensschritt d abläuft, in welchem eine vom Fahrzeug (100) zwischen dem ersten Zeitpunkt und dem zweiten Zeitpunkt zurückgelegte Wegstrecke (51) erfasst wird, und wobei nach dem Verfahrensschritt c und d ein Verfahrensschritt e abläuft, in welchem bestimmt wird, dass falls Energie abgeführt wurde und zudem die erfasste Wegstrecke (51) ungleich Null ist, die abgeführte Energie zumindest teilweise an einen Elektromotor (60) des Fahrzeugs (100) abgeführt wurde.

9. Verfahren nach Anspruch 8, **dadurch gekennzeichnet, dass** im Verfahrensschritt e bestimmt wird, dass falls Energie abgeführt wurde und zudem die erfasste Wegstrecke (51) gleich Null ist, die abgeführte Energie zumindest teilweise an einen externen Verbraucher (70) abgeführt wurde.

10. Verfahren nach einem der Ansprüche 6 bis 9, **dadurch gekennzeichnet, dass** in einem Verfahrensschritt f bestimmt wird, ob das Fahrzeug (100) zwischen dem ersten und zweiten Zeitpunkt privat und/oder geschäftlich genutzt wurde.

11. Fahrzeug (100) mit einem Batteriemodulsystem nach einem der Ansprüche 1 bis 5.
